# EUROPÄISCHE PATENTSCHRIFT

(11) **EP 2 047 222 B1**
(45) Veröffentlichungstag und Bekanntmachung des Hinweises auf die Patenterteilung: **19.05.2010**
(21) Anmeldenummer: 07787636.5
(22) Anmeldetag: 17.07.2007
(51) Int. Cl.: G01K 7/21, G01K 7/25, G01K 13/02

(54) **TEMPERATURSENSOR**
TEMPERATURE SENSOR
CAPTEUR DE TEMPERATURE

(30) Priorität: 24.07.2006 DE 102006034181
(43) Veröffentlichungstag der Anmeldung: 15.04.2009
(73) Patentinhaber: Continental Automotive GmbH, 30165 Hannover (DE)
(72) Erfinder: GLEHR, Manfred, 93173 Wenzenbach (DE); HEINRICH, Stephan, 84076 Pfeffenhausen (DE)
(86) Internationale Anmeldenummer: PCT/EP2007/057370
(87) Internationale Veröffentlichungsnummer: WO 2008/012239

(56) Entgegenhaltungen:
- EP-A- 0 113 554
- EP-A- 0 800 068
- DE-A1- 19 922 928
- JP-A- 55 129 715
- JP-A- 60 020 613
- US-A- 2 438 575

## Beschreibung

Die Erfindung betrifft einen Temperatursensor zur Bestimmung der Temperatur von Abgasen eines Verbrennungsmotors mit einem in einem Gehäuse angeordneten temperaturempfindlichen Sensorelement und mit einer im Inneren des Gehäuses verlaufenden Kontaktleitung, die an das Sensorelement angeschlossen ist.

Ein derartiger Temperatursensor ist aus der DE 101 58 529 A1 bekannt. Der bekannte Temperatursensor weist ein zylinderförmiges Gehäuse auf, das in die Wand einer Abgasleitung eingesetzt werden kann. An dem in die Abgasleitung einbringbaren Ende des Gehäuses sind Durchgangslöcher vorgesehen, durch die Abgas in das Gehäuse eindringen kann. Innerhalb des Gehäuses erstreckt sich ein Keramiksubstrat, auf dem im Bereich der Durchgangslöcher ein Thermistor ausgebildet ist. Ferner sind auf dem Keramiksubstrat Kontaktleitungen ausgebildet, die durch ein im Inneren des Gehäuses angeordnetes Halteelement hindurchführen. An den zum Anschluss von Kabeln vorgesehenen Enden des Keramiksubstrats sind Kontaktklammern angeordnet, an denen externe Kabel angebracht werden können. Da das zum Halten des Keramiksubstrats im Gehäuse vorgesehene Halteelement aus einem Metallnetz gewickelt ist, wird das Innere des Gehäuses durch das Halteelement nicht abgedichtet. Daher ist im Bereich der an die Kontaktklammern angeschlossenen Kabel eine Abdichtung vorgesehen, mit der das Gehäuse kabelseitig abgedichtet werden kann.

Der bekannte Temperatursensor dient dazu, die Abgastemperatur von Verbrennungsmotoren zu überwachen. Die Abgastemperatur von Verbrennungsmotoren ist ein wichtiger Parameter für die Motorsteuerung. Insbesondere sollen die Motoraggregate vor Überhitzung geschützt und die von dem Verbrennungsmotor ausgestoßenen Schadstoffe minimiert werden. Bei Dieselmotoren ist insbesondere eine Überwachung der Rußpartikelfilter vorgesehen. Die im Abgas auftretenden Temperaturen betragen dabei bis zu 1100 °C.

Die Montage des bekannten Temperatursensors erfolgt, indem die Abdichtung an den Kabeln angebracht wird. Anschließend werden die Kabel mit den Kontaktklammern verbunden und das Halteelement um das Keramiksubstrat gewickelt. Das Keramiksubstrat wird dann in das Gehäuse eingeschoben, und die Abdichtung, die die externen Kabel umschließt, in die kabelseitige Öffnung des Gehäuses eingebracht.

Ein Nachteil des bekannten Temperatursensors ist, dass durch die Durchgangslöcher des Gehäuses Rußpartikel in das Innere des Temperatursensors gelangen und sich dort festsetzen können. Dadurch kann sich das Messverhalten des Temperatursensors mit der Zeit ändern. Außerdem ist die Montage des bekannten Temperatursensors aufwändig. Denn das aus einem Netz gewickelte Halteelement hält das Keramiksubstrat nicht in einer definierten Lage. Außerdem kann das Halteelement entlang dem Keramiksubstrat verrutschen, wenn das Halteelement zusammen mit dem Keramiksubstrat in das Gehäuse eingeführt wird.

Ausgehend von diesem Stand der Technik liegt der Erfindung daher die Aufgabe zugrunde, einen einfach montierbaren Temperatursensor mit definierten Messeigenschaften zu schaffen.

Diese Aufgabe wird durch einen Temperatursensor mit den Merkmalen des unabhängigen Anspruchs gelöst. In davon abhängigen Ansprüchen sind vorteilhafte Ausgestaltungen und Weiterbildungen angegeben.

Bei dem Temperatursensor befindet sich das temperaturempfindliche Sensorelement in Kontakt mit dem als Kontaktleitung ausgebildeten Gehäuse. Dadurch wird die Montage des Sensorelements im Gehäuse wesentlich vereinfacht, da das Sensorelement auf einfache Weise in das Gehäuse eingelegt werden kann. Zur Vereinfachung der Montage trägt auch der Umstand bei, dass das Gehäuse als Kontaktleitung ausgebildet ist, da im Inneren des Gehäuses eine Kontaktleitung weniger zum Sensorelement geführt werden muss. Darüber hinaus sind keine Öffnungen in der Wand des Gehäuses notwendig, da das Sensorelement über die Wand des Gehäuses thermisch an den externen Gasstrom angekoppelt ist. Daher können sich auch keine Rußpartikel im Inneren des Gehäuses festsetzen. Durch das Anliegen des Sensorelements am Gehäuse weist das Sensorelement schließlich eine definierte Lage in Bezug auf das Gehäuse auf, so dass die thermische Koppelung zwischen Sensorelement und dem Gehäuse bei unterschiedlichen Exemplaren des Temperatursensors jeweils gleich ist. Dementsprechend gering fällt die Streuung der Messeigenschaften der Temperatursensoren aus. Der Temperatursensor ist daher einfach montierbar und weist ein definiertes Temperaturverhalten auf.

Bei einer bevorzugten Ausführungsform verläuft die an das Sensorelement angeschlossene Kontaktleitung konzentrisch im Inneren des Gehäuses. In diesem Fall kommt es nicht auf die Winkellage der Kontaktleitung an, damit ein Kontakt zwischen der im Inneren des Gehäuses verlaufenden Kontaktleitung und dem Sensorelement zustande kommt. Dadurch wird die Montage weiter vereinfacht.

Vorzugsweise ist die innere Kontaktleitung in eine Isolierung mit einer konzentrischen Durchführung eingebettet. Diese Maßnahme stellt sicher, dass sich die innere Kontaktleitung in einer definierten Lage bezüglich des Gehäuses befindet und in Kontakt mit dem Sensorelement steht.

Bei dem Sensorelement kann es sich beispielsweise um einen Thermistor handeln. Zum Anschluss von Thermistoren werden lediglich zwei Kontaktleitungen benötigt, so dass das als Kontaktleitung ausgebildete Gehäuse und die innere Kontaktleitung ausreichend sind.

Vorzugsweise handelt es sich bei dem Thermistor um einen Thermistor mit negativem Temperaturkoeffizienten, einem sogenannten Heißleiter. Derartige Sensorelemente sind kostengünstig herstellbar und eignen sich für die Messung hoher Temperaturen, wie sie im Abgas auftreten.

Um beim Temperatursensor eine Fehlerdiagnose zu ermöglichen, ist parallel zum Heißleiter ein Prüfwiderstand geschaltet. Mit Hilfe des Prüfwiderstands kann festgestellt werden, ob auf dem Weg bis zum Prüfwiderstand ein Kurzschluss oder eine Unterbrechung des Kabels und der Kontaktleitungen im Inneren des Temperatursensors vorliegt.

Vorzugsweise ist der Prüfwiderstand zur Innenkontur des Gehäuses komplementär ausgebildet und liegt mit seiner Außenseite auf der Innenseite des Gehäuses an. Da es bei einer derartigen Ausgestaltung und Anordnung des Prüfwiderstands auf die Winkellage des Prüfwiderstands nicht ankommt, kann der Prüfwiderstand auf einfache Weise im Inneren des Gehäuses montiert werden.

Der Kontakt zwischen dem Sensorelement und der inneren Kontaktleitung wird vorzugsweise mit Hilfe eines Federelements bewerkstelligt, das eine Federkraft auf die innere Kontaktleitung und das Sensorelement ausübt. Dieses Federelement kann beispielsweise eine Ringfeder sein, die den Kontakt zwischen der inneren Kontaktleitung und dem an der Innenseite des Gehäuses anliegenden Prüfwiderstand vermittelt.

Ein derartiges Federelement liegt beispielsweise mit der dem Sensorelement zugewandten Seite auf dem Prüfwiderstand und der inneren Kontaktleitung auf. Auf der dem Sensorelement abgewandten Seite kann das Federelement an einer Stützeinrichtung anliegen, die vom Gehäuse des Temperatursensors oder von einer weiteren Einlage gebildet ist.

Ferner kann im Inneren des Gehäuses ein Schaltungsträger vorgesehen sein, auf dem eine Sensorschaltung zum Betrieb des Sensorelements ausgebildet ist. Dies bietet den Vorteil, dass der Temperatursensor mit zusätzlicher Intelligenz zur Überwachung des Sensorelements ausgestattet werden kann. Außerdem kann eine digitale Übertragung von Daten zu einem zentralen Bordrechner eingerichtet werden. Durch die digitale Datenübertragung kann der Einfluss von Störungen vermindert werden. Zur Störsicherheit trägt auch bei, dass sich die Sensorschaltung abgeschirmt im Inneren des Gehäuses befindet.

Weitere Vorteile und Eigenschaften der Erfindung gehen aus der nachfolgenden Beschreibung hervor, in der Ausführungsbeispiele der Erfindung anhand der beigefügten Zeichnung im Einzelnen erläutert werden. Es zeigen:
- Figur 1: eine Längsschnittsansicht eines Temperatursensors;
- Figur 2: ein Ersatzschaltbild für den Temperatursensor aus Figur 1;
- Figur 3: ein Diagramm, in das die Kennlinie des Temperatursensors aus Figur 1 eingetragen ist; und
- Figur 4: ein Blockschaltbild eines weiteren Temperatursensors.

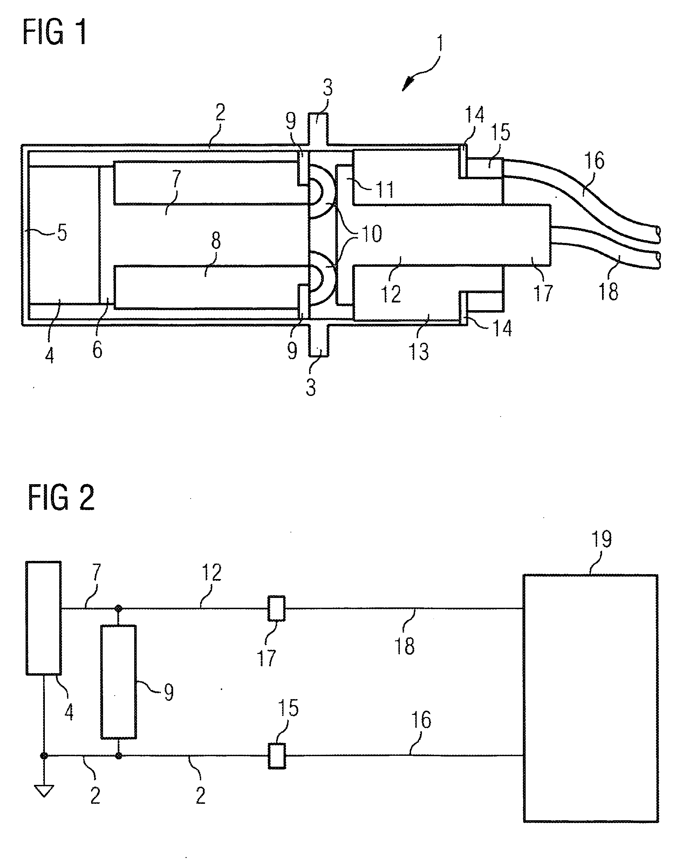

Figur 1 zeigt einen Temperatursensor 1, der zur Messung der Temperatur von Abgasen vorgesehen ist. Der Temperatursensor 1 weist ein lang gestrecktes zylindrisches Gehäuse 2 auf, an dem ein umlaufender Anschlagring 3 ausgebildet ist. Der Anschlagring 3 definiert einen Anschlag, bis zu dem das Gehäuse 2 des Temperatursensors 1 in die Wand einer Abgasleitung eingesetzt werden kann. Zu diesem Zweck kann an der Abgasleitung ein Stutzen ausgebildet sein, in den der Temperatursensor 1 eingebracht wird und an dem der Temperatursensor 1 beispielsweise mit Hilfe einer Überwurfmutter befestigt werden kann.

Im Inneren des Gehäuses 2 ist ein Thermistor 4 angeordnet, der an einem Boden 5 des Gehäuses 2 anliegt. Bei dem Thermistor 4 handelt es sich insbesondere um einen Heißleiter, der zur Messung von hohen Temperaturen im Bereich bis zu 1100 °C eingerichtet ist. Bei dem Thermistor 4 kann es sich allerdings auch um einen Platinwiderstand handeln. Auf der dem Boden 5 gegenüberliegenden Seite ist der Thermistor 4 mit einer Kontaktscheibe 6 abgedeckt, die mit einem Kontaktstift 7 verbunden ist. Der Kontaktstift 7 ist von einer Isolierhülse 8 umgeben. Die Isolierhülse 8, die an der Innenseite des Gehäuses 2 anliegt, hält den Kontaktstift 7 und damit die Kontaktscheibe 6 in einer annähernd konzentrischen Lage. Wenn der Thermistor 4 an der Kontaktscheibe 6 angebracht ist, hält die Isolierhülse 8 auch den Thermistor 4 im Abstand zum Gehäuse 2.

Da der Temperatursensor 1 bis zum Anschlagring 3 in eine Abgasleitung eingebracht wird, befinden sich der Thermistor 4 sowie die Kontaktscheibe 6, der Kontaktstift 7 und die Isolierhülse 8 in einem Abschnitt des Gehäuses 2 mit erhöhter Temperatur. Die Isolierhülse 8 ist daher vorzugsweise aus einem keramischen Material hergestellt.

Am gegenüberliegenden Ende der Isolierhülse 8 ist ein ringförmig ausgebildeter Prüfwiderstand 9 angeordnet, der über eine Ringfeder 10 mit dem Kontaktstift 7 elektrisch leitend verbunden ist. Die Ringfeder 10 wird von einer Kontaktscheibe 11 gehalten. Die Kontaktscheibe 11 ist mit einem weiteren Kontaktstift 12 verbunden. Der Kontaktstift 12 und die Kontaktscheibe 11 sind von einer Isolierhülse 13 gehalten, die beispielsweise von einem Gehäusedeckel 14 gegen die Kontaktscheibe 11 und damit auf die Ringfeder 10 gedrückt wird. Die Isolierhülse 13 kann ebenfalls aus einem keramischen Material gefertigt werden. Da sich die Isolierhülse 13 außerhalb der Abgasleitung befindet und daher nicht den hohen Abgastemperaturen ausgesetzt ist, können jedoch auch andere Isoliermaterialien, zum Beispiel Kunststoffe, verwendet werden. Der Gehäusedeckel 14 kann auch durch Laschen des Gehäuses ersetzt werden, die nach der Montage der sich im Inneren des Gehäuses 2 befindenden Elemente nach Innen auf die Isolierhülse 13 gebogen werden. Ferner kann anstelle der Ringfeder 10 auch eine Schraubenfeder verwendet werden.

Im Bereich des Gehäusedeckels 14 kann auch eine Befestigungsvorrichtung 15 zum Anschluss eines Massekabels 16 und eine weitere Befestigungsvorrichtung 17 zum Anschluss eines Signalkabels 18 vorgesehen sein.

Um die Montage des Temperatursensors 1 möglichst einfach zu gestalten, sind die im Inneren des Gehäuses 2 angeordneten Komponenten, insbesondere der Thermistor 4, die Kontaktscheiben 6 und 11, die Kontaktstifte 7 und 12 sowie die Ringfeder 10 vorzugsweise rotationssymmetrisch ausgebildet. Ferner ist an der Isolierhülse 8 eine zum Prüfwiderstand 9 komplementäre Vertiefung vorgesehen.

Zur Montage des Temperatursensors 1 wird zunächst der Thermistor 4 mit der daran angebrachten Kontaktscheibe 6 und dem Kontaktstift 7 in das Gehäuse 2 eingeführt. Anschließend wird die Isolierhülse 8 eingeschoben. Anschließend kann der Prüfwiderstand 9 eingelegt werden und die Ringfeder 10 eingebracht werden. Nach dem Einführen der Kontaktscheibe 11, des Kontaktstifts 12 und der Isolierhülse 13 kann der Gehäuse-deckel 14 aufgebracht werden. Abschließend werden an den Befestigungsvorrichtungen 15 und 17 jeweils das Massekabel 16 und das Signalkabel 18 angebracht.

Da die in das Innere des Gehäuses 2 eingebrachten Komponenten konzentrisch ausgebildet sind, ist die Montage des Temperatursensor 1 einfach durchzuführen und kann fallweise durch Automaten erfolgen.

Da der Thermistor 4 unmittelbar am Boden 5 des Gehäuses 2 anliegt, ergibt sich eine gute Wärmekoppelung zwischen dem Thermistor 4 und dem das Gehäuse 2 umströmenden Abgas. Dementsprechend ergeben sich kurze Ansprechzeiten für den Temperatursensor 1. Ferner sind keine Durchführungen im Gehäuse 2 nötig, um den Thermistor 4 thermisch an das Abgas anzukoppeln. Im Abgas enthaltene Rußpartikel können sich daher nur auf der Oberfläche des Gehäuses 2 ablagern, sofern sie nicht von der Abgasströmung wieder entfernt werden. Es ist daher nicht möglich, dass sich Rußpartikel im Inneren des Gehäuses 2 festsetzen.

Ein weiterer Vorteil des Temperatursensors 1 ist, dass sich die Komponenten im Inneren des Gehäuses 2 unter Federspannung befinden. Dadurch können die sich im Inneren des Gehäuses 2 befindenden Komponenten fehlertolerant gefertigt werden. Außerdem sind keine aufwändigen Schweißstellen notwendig.

Durch den in den Temperatursensor 1 integrierten Prüfwiderstand 9 kann die Funktion der Zuleitungen bis zum Prüfwiderstand 9 überprüft werden. Figur 2 zeigt ein Ersatzschaltbild des Temperatursensors 1, in dem der Anschluss des Thermistors 4 an ein Steuergerät 19 deutlich wird. Bei dem Steuergerät 19 kann es sich beispielsweise um einen Bordrechner handeln. Anhand Figur 2 wird erkennbar, dass über den Prüfwiderstand 9 die Funktion der Zuleitungen, nämlich des Signalkabels 18 und des Kontaktstifts 12, sowie die Funktion der Masseleitung, nämlich des Gehäuses 2 sowie des Massekabels 16 auf Kurzschlüsse untersucht werden kann.

Durch die Anwesenheit des Prüfwiderstands 9 wird allerdings die Kennlinie des Thermistors 4 verändert.

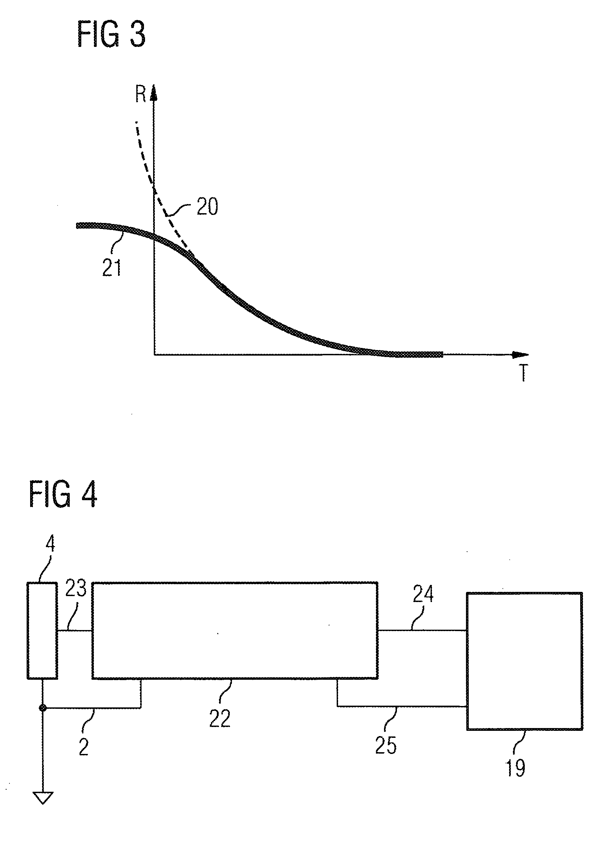

Figur 3 zeigt ein Diagramm, in das die Kennlinie des Temperatursensors 1 eingetragen ist. Eine Widerstandskurve 20 gibt die Abhängigkeit des Widerstands des Thermistors 4 in Abhängigkeit von der Temperatur wieder. Die Widerstandskurve 20 steigt mit abnehmenden Temperaturen steil an. Eine weitere Widerstandskurve 21 zeigt die Abhängigkeit des Widerstands des Temperatursensors 1 von der Temperatur. Die Widerstandskurve 21 steigt mit abnehmender Temperatur zunächst an und flacht dann entsprechend dem Widerstandswert des Prüfwiderstands 9 ab. Typischerweise liegt der Wert des Prüfwiderstands 9 im Bereich zwischen 10 und 20 kΩ.

In Abwandlung zu dem anhand der Figuren 1 bis 3 beschriebenen Temperatursensor 1 kann im Inneren des Gehäuses 2 ein Schaltungsträger 22 angeordnet sein, der über eine Kontaktleitung 23 mit dem Thermistor 4 verbunden ist. Die Kontaktleitung 23 kann entsprechend der Kontaktscheibe 6 und dem Kontaktstift 7 ausgebildet sein. Auf dem Schaltungsträger 22 können Sensorschaltungen ausgebildet sein, die beispielsweise der Signalverarbeitung insbesondere der Signalverstärkung dienen. Insbesondere kann ein digitales Messsignal erzeugt werden, das über eine Datenleitung 24 an das Steuergerät 19 gesendet wird. Dadurch kann insbesondere die Störsicherheit bei der Übertragung des Messsignals verbessert werden. Für die Datenübertragung kann ein Protokoll wie beispielsweise SAE SENT verwendet werden. Die Datenübertragung kann aber auch mit Hilfe von Pulsweitenmodulation erfolgen. Ferner kann die auf dem Schaltungsträger 22 ausgebildete Sensorschaltung auch einen offenen Kollektorausgang bereitstellen. Über die Datenleitung 24 kann auch die Energieversorgung der Sensorschaltung bewerkstelligt werden, indem beispielsweise dem Datensignal eine Gleichstromkomponente überlagert wird. Weiterhin besteht die Möglichkeit, auf dem Schaltungsträger 22 zusätzliche Sensoren anzuordnen, mit denen sich beispielsweise die Temperatur im Bereich des Schaltungsträgers 22 überwachen lässt. Auf diese Weise kann eine eventuelle Überhitzung des Schaltungsträgers 22 erkannt werden. Schließlich kann auch der Thermistor 4 an dem Schaltungsträger 22 befestigt oder auf diesem angeordnet sein.

Schließlich sei noch darauf hingewiesen, dass das Steuergerät 19 neben der Datenleitung 24 auch über eine Masseleitung 25 mit dem Schaltungsträger 22 verbunden ist.

Es wird darauf hingewiesen, dass in den Ansprüchen und in der Beschreibung der Singular den Plural einschließt, außer wenn sich aus dem Zusammenhang etwas anderes ergibt. Insbesondere wenn der unbestimmte Artikel verwendet wird, ist sowohl der Singular als auch der Plural gemeint.

Schließlich sei darauf hingewiesen, dass Merkmale und Eigenschaften, die im Zusammenhang mit einem bestimmten Ausführungsbeispiel beschrieben worden sind, auch mit einem anderen Ausführungsbeispiel kombiniert werden können, außer wenn dies aus Gründen der Kompatibilität ausgeschlossen ist.

## Patentansprüche

1. Temperatursensor zur Bestimmung der Temperatur von Abgasen eines Verbrennungsmotors mit einem in einem Gehäuse (2) angeordneten temperaturempfindlichen Sensorelement (4) und mit einer im Inneren des Gehäuses (2) verlaufenden Kontaktleitung (6, 7, 10, 11, 12), die an das Sensorelement (4) angeschlossen ist, **dadurch gekennzeichnet, dass** das Sensorelement (4) in Kontakt mit dem als weitere Kontaktleitung ausgebildeten Gehäuse (2) steht und eine im Inneren des Gehäuses (2) angeordnete Ringfeder (10) eine in axiale Richtung wirkende Federkraft auf das Sensorelement (4) und die im Inneren des Gehäuses (2) verlaufende Kontaktleitung (6, 7, 11, 12) ausübt.

2. Temperatursensor, nach Anspruch 1, **dadurch gekennzeichnet, dass** die im Inneren des Gehäuses (2) verlaufende Kontaktleitung (6, 7, 10, 11, 12), die in Kontakt mit dem Sensorelement (4) steht, konzentrisch ausgebildet ist.

3. Temperatursensor nach Anspruch 2, **dadurch gekennzeichnet, dass** die im Inneren verlaufende Kontaktleitung (6, 7, 11, 12) wenigstens abschnittsweise von einer konzentrisch ausgebildeten Isolierung (8, 13) gehalten ist.

4. Temperatursensor nach einem der Ansprüche 1 bis 3,
**dadurch gekennzeichnet, dass** das Sensorelement (4) ein Thermistor ist.

5. Temperatursensor nach Anspruch 4, **dadurch gekennzeichnet, dass** das Sensorelement (4) ein Heißleiter ist.

6. Temperatursensor nach Anspruch 5, **dadurch gekennzeichnet, dass** im Inneren des Gehäuses (2) ein Prüfwiderstand (9) zum Sensorelement (4) parallel geschaltet ist.

7. Temperatursensor nach Anspruch 6, **dadurch gekennzeichnet, dass** der Prüfwiderstand (9) ringförmig und im montierten Zustand mit seiner Außenseite an der Innenseite des Gehäuses (2) anliegend ausgebildet ist.

8. Temperatursensor nach Anspruch 7, **dadurch gekennzeichnet, dass** die Ringfeder (10) einen elektrisch leitenden Kontakt zwischen dem Prüfwiderstand (9) und der im Inneren des Gehäuses (2) verlaufenden Kontaktleitung (6, 7, 10, 11) herstellt.

9. Temperatursensor nach einem der Ansprüche 1 bis 8,
**dadurch gekennzeichnet, dass** im Inneren des Gehäuses (2) ein Schaltungsträger (22) mit einer Sensorschaltung zum Betrieb des Sensorelements (4) angeordnet ist.

10. Temperatursensor nach Anspruch 9, **dadurch gekennzeichnet, dass** die zum Betrieb des Sensorelements (4) vorgesehene Sensorschaltung ein digitales Datensignal erzeugt.

11. Temperatursensor nach Anspruch 9 oder 10, **dadurch gekennzeichnet, dass** die Sensorschaltung zur Erfassung zusätzlicher physikalischer Größen eingerichtet ist.

12. Temperatursensor nach Anspruch 11, **dadurch gekennzeichnet, dass** mit der Sensorschaltung die Temperatur im Bereich der Sensorschaltung erfassbar ist.

13. Temperatursensor nach einem der Ansprüche 9 bis 12,
**dadurch gekennzeichnet, dass** das in Kontakt mit dem Gehäuse (4) stehende Sensorelement (2) auf dem Schaltungsträger (22) angeordnet ist.

## Claims

1. Temperature sensor for determining the temperature of exhaust gases from an internal combustion engine, having a temperature-sensitive sensor element (4) which is arranged in a housing (2), and having a contact line (6, 7, 10, 11, 12) which runs in the interior of the housing (2) and is connected to the sensor element (4), **characterized in that** the sensor element (4) is in contact with the housing (2) which is in the form of a further contact line, and a spring element (10) which is arranged in the interior of the housing (2) exerts a spring force, which acts in the axial direction, on the sensor element (4) and the contact line (6, 7, 11, 12) which runs in the interior of the housing (2).

2. Temperature sensor according to Claim 1, **characterized in that** the contact line (6, 7, 10, 11, 12) which runs in the interior of the housing (2) and is in contact with the sensor element (4) is of concentric design.

3. Temperature sensor according to Claim 2, **characterized in that** the contact line (6, 7, 11, 12) which runs in the interior is held, at least in portions, by an insulation means (8, 13) of concentric design.

4. Temperature sensor according to one of Claims 1 to 3, **characterized in that** the sensor element (4) is a thermistor.

5. Temperature sensor according to Claim 4, **characterized in that** the sensor element (4) is a negative temperature coefficient thermistor.

6. Temperature sensor according to Claim 5, **characterized in that** a test resistor (9) is connected in parallel with the sensor element (4) in the interior of the housing (2).

7. Temperature sensor according to Claim 6, **characterized in that** the test resistor (9) is of annular design and, in the mounted state, is designed to rest against the inner face of the housing (2) by way of its outer face.

8. Temperature sensor according to Claim 7, **characterized in that** the annular spring (10) establishes electrically conductive contact between the test resistor (9) and the contact line (6, 7, 10, 11) which runs in the interior of the housing (2).

9. Temperature sensor according to one of Claims 1 to 8, **characterized in that** a circuit mount (22) comprising a sensor circuit for operating the sensor element (4) is arranged in the interior of the housing (2).

10. Temperature sensor according to Claim 9, **characterized in that** the sensor circuit which is provided for operating the sensor element (4) generates a digital data signal.

11. Temperature sensor according to Claim 9 or 10,
**characterized in that** the sensor circuit is designed to detect additional physical variables.

12. Temperature sensor according to Claim 11, **characterized in that** the temperature in the region of the sensor circuit can be detected using the sensor circuit.

13. Temperature sensor according to one of Claims 9 to 12, **characterized in that** the sensor element (2) which is in contact with the housing (4) is arranged on the circuit mount (22).

## Revendications

1. Capteur de température permettant de déterminer la température des gaz d'échappement d'un moteur à combustion interne, ledit capteur comportant un élément capteur (4) sensible à la température monté dans un boîtier (2) et un conducteur de raccordement (6, 7, 10, 11, 12) raccordé à l'élément capteur (4) et logé à l'intérieur du boîtier (2), **caractérisé par le fait que** l'élément capteur (4) est en contact avec le boîtier (2) conçu comme autre conducteur de raccordement et qu'un anneau-ressort (10) disposé à l'intérieur du boîtier (2) exerce une force élastique dans le sens axial sur l'élément capteur (4) et sur le conducteur de raccordement (6, 7, 11, 12) logé à l'intérieur du boîtier (2).

2. Capteur de température selon la revendication 1, **caractérisé par le fait que** le conducteur de raccordement (6, 7, 10, 11, 12), qui est logé à l'intérieur du boîtier (2) et qui est en contact avec l'élément capteur (4) est concentrique.

3. Capteur de température selon la revendication 2, **caractérise par le fait que** le conducteur de raccordement (6, 7, 11, 12) logé à l'intérieur est au moins partiellement maintenu par un isolement (8, 13) concentrique.

4. Capteur de température selon l'une des revendications 1 à 3, **caractérisé par le fait que** l'élément capteur (4) est un thermistor.

5. Capteur de température selon la revendication 4, **caractérise par le fait que** l'élément capteur (4) est une thermistance.

6. Capteur de température selon la revendication 5, **caractérise par le fait que**, à l'intérieur du boîtier (2), une résistance de test (9) est branchée en parallèle sur l'élément capteur (4).

7. Capteur de température selon la revendication 6, **caractérisé par le fait que** la résistance de test (9) est annulaire et, dans son état installé, s'applique par sa face extérieure sur la face intérieure du boîtier (2).

8. Capteur de température selon la revendication 7, **caractérisé par le fait que** l'anneau-ressort (10) établit un contact électrique entre la résistance de test (9) et le conducteur de raccordement (6, 7, 10, 11) logé à l'intérieur du boîtier (2).

9. Capteur de température selon l'une des revendications 1 à 8, **caractérisé par le fait que**, à l'intérieur du boîtier (2), est disposé un support de circuits (22) comportant un circuit de capteur permettant d'exploiter l'élément capteur (4).

10. Capteur de température selon la revendication 9, **caractérisé par le fait que** le circuit de capteur prévu pour l'exploitation de l'élément capteur (4) génère un signal numérique.

11. Capteur de température selon la revendication 9 ou 10, **caractérisé par le fait que** le circuit de capteur est configuré pour la détection de grandeurs physiques supplémentaires.

12. Capteur de température selon la revendication 11, **caractérisé par le fait qu**'il est possible, avec le circuit de capteur, de détecter la température à proximité du circuit de capteur.

13. Capteur de température selon l'une des revendications 9 à 12, **caractérisé par le fait que** l'élément capteur (4) qui est en contact avec le boîtier (2) est monté sur le support de circuits (22).
